# EUROPEAN PATENT APPLICATION

(11) **EP 2 101 450 A1**
(43) Date of publication of application: **16.09.2009**
(21) Application number: 08152709.5
(22) Date of filing: 13.03.2008
(51) Int. Cl.: H04L 12/56

(54) **Quality of service signalling in mobile IP**

(71) Applicant: Åhlund, Christer, 931 33 Skellefteå (SE); Brännström, Robert, 931 65 Skellefteå (SE); Andersson, Karl, 931 44 Skellefteå (SE)
(72) Inventor: Åhlund, Christer, 931 33 Skellefteå (SE); Brännström, Robert, 931 65 Skellefteå (SE); Andersson, Karl, 931 44 Skellefteå (SE)
(74) Representative: Karlsson, Leif Karl Gunnar

(57) **Abstract**

The present invention relates to a method to establish the required quality of service, QoS, for a mobile node using mobile IP in a visited network where different control messages are used by the mobile node when informing its home agent or correspondent node of its location. The header of the control message is extended with a first field and a first bit (D), where the first field represents information regarding requested QoS, and the first bit represents a flag indicating if QoS information is present in the first field or not. The home agent stores the information regarding QoS in a home agent binding cache.

## Description

### Field of invention

The present invention relates to a method to establish the required quality of service for a mobile node using mobile IP in a visited network where different control messages are used by the mobile node when informing its home agent or correspondent node of its location. The present invention also relates to a computer program product and a computer readable medium thorough which the present invention can be realised.

### Background Art

Quality of Service (QoS) is becoming important in IP networks with the emerging multimedia applications like Voice over IP (VoIP) and IP-TV among other applications. For QoS in IP networks there are two major proposals; Integrated Services (IntServ) and Differentiated Services (DiffServ). The DiffServ approach is the most scalable and accepted solution in today's Internet community. The IP header has a 6-bit field named Differentiated Service Code Point (DSCP) used by routers and switches (layer 3 switches) in the Internet to differentiate the priority between flows.

Types of network traffic that requires high QoS are media-flows like VoIP and IP-TV, while downloading files (FTP) end emails are less critical. In DiffServ there are 3 major classes; Expedited Forwarding (EF); Assured Forwarding (AF) and Best Effort (BE). Traditionally the Internet has bin a BE network but current efforts are on introducing the other QoS classes as well, The EF class is used for time critical applications like VoIP. In beween the EF and BE classes we have the AF class that is subdivided into 4 subclasses.

The Service Level Agreements (SLA) subscribed to by users will include different services as well as their quality. At the same time, mobility in IP networks is being introduced, and an important step in this direction in the introduction of the Mobile IP (MIP). MIP enables users to connect to different networks, usually called foreign networks or visited networks, and still being accessible, and having the same access, as when connected to the home network.

With MIP the design of the IP and the IP-address both identifying a host and its location can be sustained. With the introduction of user mobility in IP networks, the SLA subscribed to will not necessary be available at a visited network. According to the MIP specification, an update of a nodes location when visiting a visited network implies that all traffic destined to the Mobile Node (MN), will be directed to the visited network. If the user has a fiber connection to its home network and when connecting to a visited network connects via less efficient technologies (e.g. WLAN or WiMAX), the network capacity will be far less than when connected to the home network. It may be that visitors at a network are given the quality AF (some of the 4 classes). At the same time a service subscribed to at the home networks assumes EF. When the MN request (using the MIP protocol) service forwarding from the home network to the visited network, traffic to the visiting node may then be dropped due to violation of the SLA.

To enable the usage of MIP for emerging applications in IP networks, filtering at the home network deciding which service(s) to forward as well as the transformation of QoS classes is needed to enable scalable mobility of services. The MIP standard must be extended with filtering capabilities to select which flow(s) to forward to a visited network and at the same time transform the QoS settings to the capabilities of the foreign network.

In MIP; the control messages are used when signalling location updates of a MN. These messages are used when the MN informs the home agent (HA), as well as correspondent nodes (CN) when route optimization is used, of its location. If IPv6 is used, then these control messages are binding updates (BU) and binding acknowledgement (BA), and if IPv4 is used these control messages are registration request (RREQ) and registration reply (RREP).

### Summary of the invention

### Problems

It is a technical problem to establish the required quality of service for a mobile node using mobile IP in a visited network in its communication with its home agent or a correspondent node.

It is a problem to manage the difference in available quality of service between correspondent node and the home network and between the home network and the visited network.

It is also a problem for a mobile node in a visited network to differentiate between different flows and to send and receive different flows via different access technologies.

It is a technical problem to establish the required quality of service for a mobile node in a visited network where route optimization is used.

### Solution

With the purpose of solving one or more of the above mentioned technical problems, and from the standpoint of method to establish the required quality of service (QoS) for a mobile node (MN) using mobile IP (MIP) in a visited network where different control messages are used by the MN when informing its home agent (HA) or correspondent node (CN) of its location, the present invention teaches that the header of the control message is extended with a first field and a first bit, that the first field represents information regarding requested QoS, that the first bit represents a flag indicating if QoS information is present in the first field or not, and that the HA stores the information regarding QoS in a HA binding cache.

The present invention teaches that when packets destined for the MN appears in the home network of the MN, the HA performs a transformation from the QoS class between the CN and the home network into the QoS class between the home network and the visited network, by intercepting the traffic of the packets and adding an outer IP header of the packets according to the QoS information in the HA binding cache.

Packets originating from the MN are routed via the HA and forwarded from the HA to the CN. The packets are provided with an outer IP header containing QoS information regarding communication between the visited network and the home network, and an inner IP header containing QoS information regarding communication between the home network and the CN. The HA strips of the outer IP header before forwarding the packets to the CN.

Where Port-based MIP is used to differentiate between flows and send different flows via different access technologies the present invention teaches that the MN prunes received traffic in order to give way for more important flows.

The header of the different control messages is extended with a third, fourth and fifth bit. The third bit represents a flag indicating that this traffic should no longer be forwarded from the HA to the MN, and the fourth and fifth bits are flags used to manage multihoming and to select which connection to use for a flow.

If the different control messages are sent without an alternate care-of address, then the HA sends an ICMP destination/port unreachable to the CN.

It is proposed that if used protocol is IPv6, then the information regarding QoS is the Differentiated Service Code Point (DSCP) field according to the Differentiated Services (DiffServ) for QoS in IP networks. The control messages are the binding update messages (BU) and binding acknowledgement messages (BA) for IPv6 and registration request (RREQ) and registration reply (RREP) for IPv4.

Where route optimization is used and the control messages are sent directly to the CN it is proposed that the CN stores the information regarding QoS in a CN binding cache, and if the CN sends packets directly to the MN, then the CN uses a routing option header with an IP header according to the QoS information in the CN binding cache.

For packets beyond the BU originating from the MN and that are routed directly from the MN to the CN it is proposed that a new IPv6 option called QoS option may be used.

The present invention also teaches that the routing option header is extended with a second field and a second bit, where the second field represents information regarding the QoS information that should have been used without QoS transformation based on the binding cache, and where the second bit represents a flag indicating if QoS information is present in the second field or not.

It is proposed that the routing option header could be a type-2 routing header.

If the BU is sent with a MIP home anchor point as the alternate care-of address, then it is proposed that the HA sends packets to the MIP home anchor point, that the MIP home anchor point is an IP address in the MNs home network where a receiver is present, and that the MIP home anchor point is different from the home address.

If the MN prunes traffic to a CN using route optimization, then it is proposed that data will be forwarded to the MN via the HA if no BU with a MIP home anchor point as the alternate care-of address is sent to the HA, or that the MIP home anchor point receives the traffic if a BU message is sent to the HA with the home anchor point as the alternate care-of address.

The present invention teaches that a mobility option header can be extended with the identifier of the flow and a third field containing the DiffServ information. In this case it is proposed that updates for multiple flows are sent in the same BU, that each mobility option header incudes the DiffServ field for respective flow, and that the DiffServ field in the BU header is ignored.

### Advantages

The advantages of a method, a computer program product or a computer readable medium according to the present invention are that Internet mobility requires solutions to move between access networks with maintained network connectivity. Communication in next generation networks will use multiple access technologies, creating a heterogeneous network environment. The present invention enables mobile nodes to move between access networks within as well as between network service providers with minimal disruption. With the usage of multihomed nodes, seamless mobility can be achieved in already installed infrastructures, not providing mobility support. Mobility in heterogeneous access networks requires network selections that scale for services. When performing access network selection, the quality of service signalling to correspondent nodes, and cancellation of flows to give way for more important traffic is needed.

### Brief description of drawings

A method, a computer program product and a computer readable medium according to the present invention will now be described in more detail with reference to the accompanying drawings in which:
- Figure 1: shows schematically a standard BU message and a BU message extended according to the present invention,
- Figure 2: shows schematically a standard type-2 routing header and a type-2 routing header extended according to the present invention,
- Figure 3: shows schematically a QoS destination option header,

- Figure 4: shows schematically a standard BU for Port-based MIP and a BU for Port-based MIP extended according to the present invention, and
- Figure 5: shows schematically a standard mobility option header for Port based MIP and mobility option header extended according to the present invention,
- Figure 6: shows schematically and very simplified ain inventive computer readable medium.

### Detailed description of embodiments

In the following description of the invention IPv6 will be used to exemplify different embodiments unless otherwise specifically stated, however, it is obvious to the skilled person how these embodiments can be modified in order to comply with other versions of the Internet Protocol, such as IPv4.

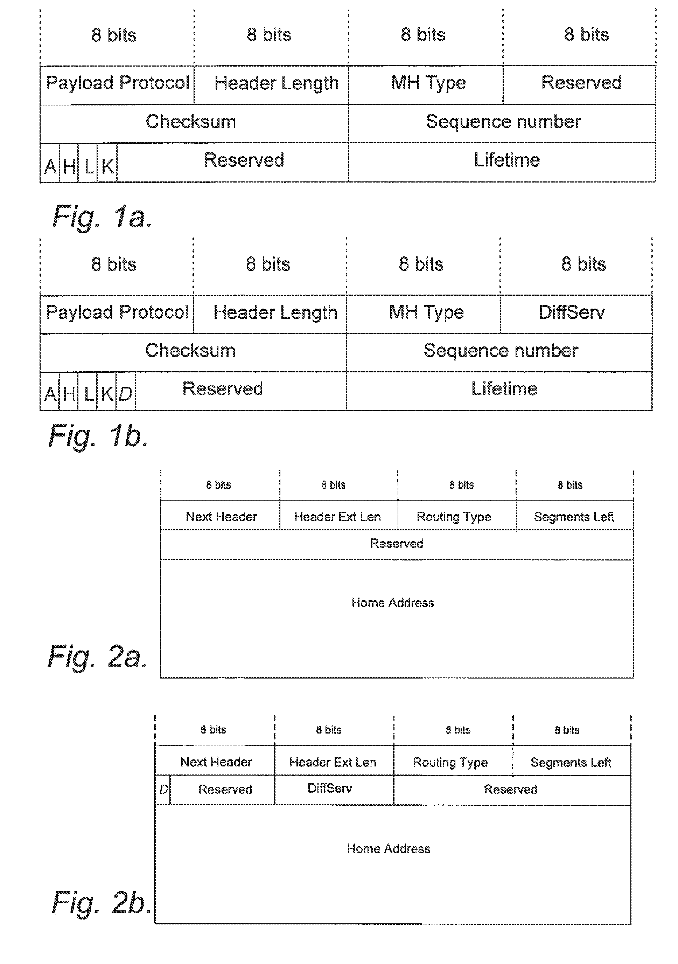

By adding the capability to include QoS signalling into the control messages, a MN will be able to inform the HA and CNs of the QoS class(es) to use when forwarding/sending packets to the MN. The BU is therefore extended to include the DSCP field. Figure 1 shows the extension made to the BU message. Figure 1 a illustrates the standard BU for IPv6 while figure 1b depicts the extensions proposed by the present invention.

When the MN informs it's HA of the QoS class to use, it inserts the DSCP bits in the DiffServ field and adds the D-flag. When receiving such a message the HA stores the DSCP bits from the DiffServ field in the binding cache. When packets destined for the MN connected to a visited network appears in the home network, the HA intercepts this traffic and adds an outer IP header, creating a tunnel, with the DSCP bits from the binding cache. This means that there is a transformation from the QoS class between the correspondent node CN and the MN's home network to the QoS class between the home network and the visited network.

When the BU is sent directly to a CN in case of route optimization, the CN stores the information in the binding cache, just as the HA does. The difference is the way in how the CN sends packets to the MN. In the case of the HA forwarding packets, a tunnel is used, but in the case that packets are sent directly from the CN to the MN, the routing option header is used. Two options is possible in this scenario; the first is that only the DSCP field from the binding cache is added to the IP header; the second is that the DSCP field that should have been used without considering the DSCP field from the BU message is added to the routing header. The second option requires an extension to the type-2 routing header, depicted in figure 2, where figure 2a shows a standard type-2 routing header and figure 2b shows the extended type-2 routing header according to the present invention. The extended type-2 routing header enables the MN to discover the QoS class that should have been used without the QoS transformation.

The extension in figure 2b consists of the DiffServ field hosting the DSCP bits and the D-flag. To enable the MN to discover if the DiffServ in the type-2 routing header host a valid entry, the D-flag is used.

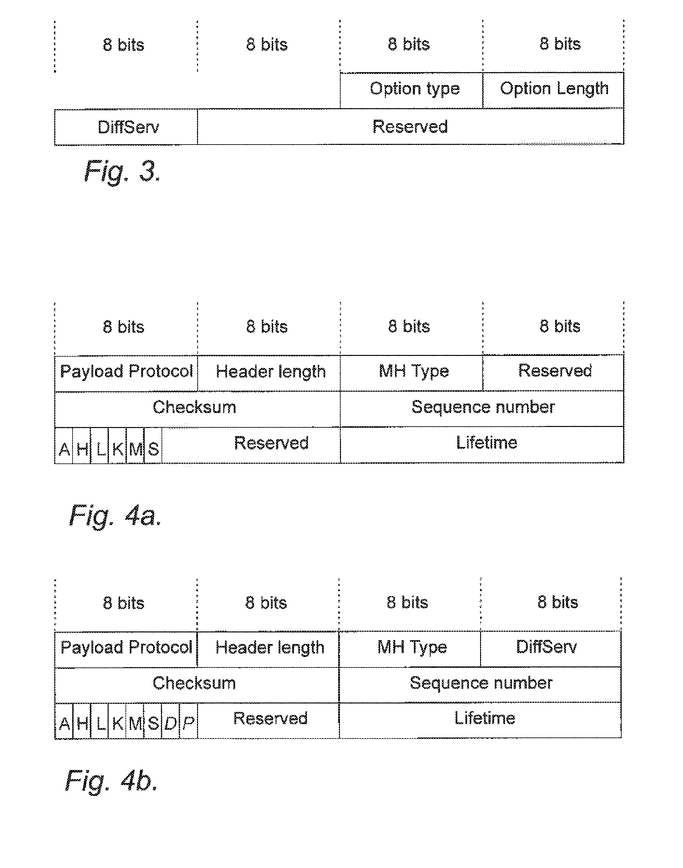

Packets originating at the MN can take two routes; one via the HA that forwards them to the CN; the other, such as in case of route optimization, directly from the MN to the CN. To enable communication using different QoS classes uplink and downlink, the MN must be able to inform the HA of the QoS class to use when forwarding them to the CN. This take place in the same way as the data from the HA to the MN; the outer IP header will contain the QoS class between the foreign network and the home network and the inner header will contain the QoS class from the home network to the CN. The HA strips of the outer IP header and forward the packet. For packets sent using route optimization a new IPv6 option called QoS destination option is used, as illustrated in figure 3.

The previously described extensions enable the management of QoS classes when connecting to foreign networks. For a scalable management of flows, the present invention also includes extensions to flow mobility enabling the MN to give flows different QoS classes and to select the once to forward. In standard MIPv6 only one care-of address is possible to register creating a binding to the home address. This means that all traffic to the home network will be forwarded to the visited network, possibly congesting the visited network especially if a wireless connection is used. In MIPv4 there is an option enabling traffic from the home network to be sent to two care-of addresses in parallel. This option is intended for handover situations and will instead of scaling traffic to network conditions induce more loads into the network.

The present invention extends previous work creating a multihomed solution for MIP, named Port-base MIP in the publication "Port-based Multihomed Mobile IPv6 for Heterogeneous Networks" by C. Ahlund, R. Brännström, K. Andersson and Ö. Tjernström, published in Proceedings of the Thirty-first IEEE Conference on Local Computer Networks, 2006, pp. 567-568. (IEEE Computer Society Press). In Port-based MIP it is possible to differentiate between flows, e.g VolP, IP-TV, Web-surfing etc, and possibly send different flows via different access technologies. As an extension of the work described in [Port-based MIP] the present invention adds QoS signalling as described above and also enables the MN while in a visited network to prune received traffic to give way for more important flows. Prune enables a MN to inform the HA to stop forward a flow via a BU message. There are two ways to use prune; if BU is sent without an alternate care-of address, the HA should send an ICMP destination/port unreachable to the CN; if the BU is sent with the home anchor point as the alternate care-of address, the HA should send received traffic to the MIP home anchor point. In the case that the MN prunes traffic to a CN using route optimization two things may take place; if no binding update is sent to the HA, data will be forwarded to the MN via the HA; if the MN wants the MIP home anchor point to receive the traffic, a BU message must also be sent to the HA with the home anchor point as the alternate care-of address. There is no requirement for a default path from the home network to the visited network. The default path can still be to the home address while only a selected flow is forwarded to the care-of address, or visited network. Figure 4 depicts the extended BU message based on Port-based MIP, where figure 4a is a BU for Port-based MIP and figure 4b is an extended BU. The P-flag and D-flag are added in this proposal as an extension. The DiffServ field is possible embodiment according to the present invention; this is a reserved field in MIPv6. The rest of the fields remain as proposed by MIPv6.

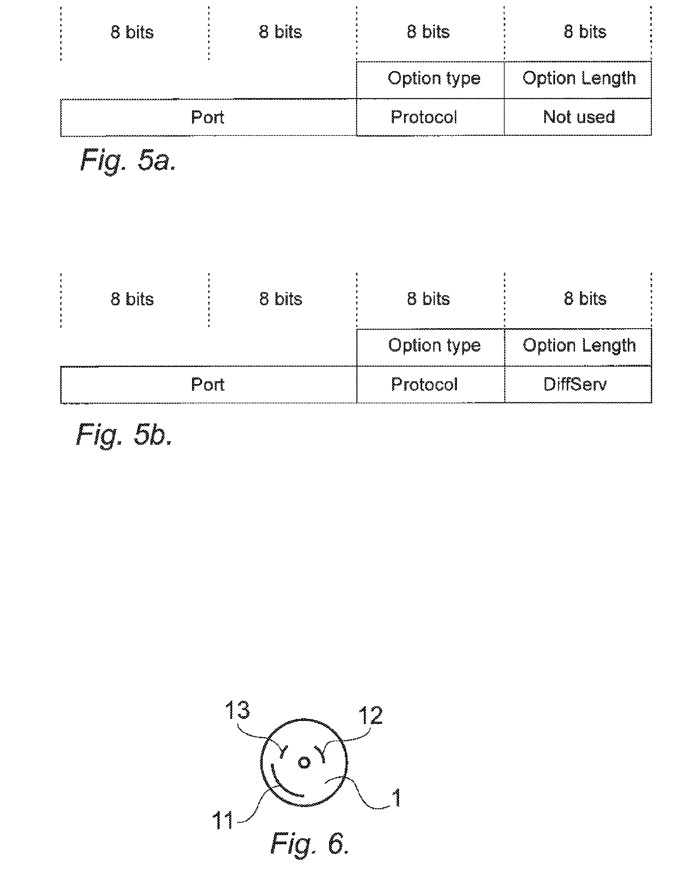

The M and S flags in figure 4 are used to manage multihoming and to select which connection to use for a flow. Figure 5 shows that in extent to the BU message a mobility option header is added, where figure 5a shows a mobility option header for Port-based MIP and figure 5b shows the extended mobility option header. The extension includes the identifier of the flow and the DiffServ field.

In port based MIP, it is possible to send updates for multiple flows in the same binding update. In such cases, if the D-flag is set; each mobility options headers will include the DiffServ field. The DiffServ field in the binding update header will in such cases be ignored.

The present invention also relates to different computer program products that can be used to realise inventive method, schematically illustrated as being stored on an inventive computer readable medium 1 in figure 6, where the computer readable medium is illustrated as a compact disc in the figure. A first computer program product comprises first computer program 11 code, which, when executed by a computer unit, will enable the computer unit to perform the steps of a MN in an inventive method, a second computer program product comprises second computer program code 12, which, when executed by a computer unit, will enable the computer unit to perform the steps of a HA in an inventive method, and a third computer program product comprises third computer program code 13, which, when executed by a computer unit, will enable the computer unit to perform the steps of a CN in an inventive method.

The invention is not limited to the embodiments shown herein but may be varied within the scope of the subsequent claims.

## Claims

1. Method to establish the required quality of service (QoS) for a mobile node (MN) using mobile IP (MIP) in a visited network where different control messages are used by said MN when informing its home agent (HA) or correspondent node (CN) of its location, **characterized in, that** the header of said control message is extended with a first field and a first bit (D), that said first field represents information regarding requested QoS, that said first bit represents a flag indicating if QoS information is present in said first field or not, and that said HA stores said information regarding QoS in a HA binding cache.

2. Method according o claim 1, **characterized in, that** when packets destined for said MN appears in the home network of said MN, said HA performs a transformation from the QoS class between said CN and said home network into the QoS class between said home network and said visited network, by intercepting the traffic of said packets and adding an outer IP header of said packets according to the QoS information in said HA binding cache.

3. Method according to any preceding claim, **characterized in, that** packets originating from said MN are routed via said HA and forwarded from said HA to said CN, that said packets are provided with an outer IP header containing QoS information regarding communication between said visited network and said home network, and an inner IP header containing QoS information regarding communication between said home network and said CN, and that said HA strips of said outer IP header before forwarding said packets to said CN.

4. Method according to claim 1 or 3, where Port-based MIP is used to differentiate between flows and send different flows via different access technologies, **characterized in, that** said MN prunes received traffic in order to give way for more important flows.

5. Method according to any one of claims 1 to 4, **characterized in, that** the header of said different control messages is extended with a third, fourth and fifth bit, that said third bit (P) represents a flag indicating that this traffic should no longer be forwarded from said HA to said MN, and that said fourth and fifth bits (M, S) are flags used to manage multihoming and to select which connection to use for a flow.

6. Method according to claim 5, **characterized in, that,** if said different control messages are sent without an alternate care-of address, then said HA sends an ICMP destination/port unreachable to said CN.

7. Method according to any preceding claim, **characterized in, that** used protocol is IPv6, that said information regarding QoS is the Differentiated Service Code Point (DSCP) field according to the Differentiated Services (DiffServ) for QoS in IP networks, and that said control messages are the binding update messages (BU) and binding acknowledgement messages (BA) for IPv6 and registration request (RREQ) and registration reply (RREP) for IPv4.

8. Method according to claim 1 or 2, where route optimization is used and said control messages are sent directly to said CN, **characterized in, that** said CN stores said information regarding QoS in a CN binding cache, that, if said CN sends packets directly to said MN, then said CN uses a routing option header with an IP header according to the QoS information in said CN binding cache.

9. Method according to claim 7 and 8, **characterized in, that** for packets beyond said BU originating from said MN and that are routed directly from said MN to said CN a new IPv6 option called OoS option may be used.

10. Method according to claim 8, **characterized in, that** said routing option header is extended with a second field and a second bit (D), that said second field represents information regarding the QoS information that should have been used without QoS transformation based on the binding cache, and that said second bit represents a flag indicating if QoS information is present in said second field or not.

11. Method according to claim 10, **characterized in, that** said routing option header is a type-2 routing header.

12. Method according to claims 4, 5 and 7, **characterized in, that,** if said BU is sent with a MIP home anchor point as the alternate care-of address, then said HA sends received traffic to the said MIP home anchor point, that said MIP home anchor point is an IP address in said MNs home network where a receiver is present, and that said MIP home anchor point is different from said home address.

13. Method according to claim 12, **characterized in, that** if said MN prunes traffic to a CN using route optimization, data will be forwarded to said MN via said HA if no BU with a MIP home anchor point as the alternate care-of address is sent to said HA.

14. Method according to claim 12, **characterized in, that** if said MN prunes traffic to a CN using route optimization, said MIP home anchor point receives the traffic if a BU message is sent to said HA with the home anchor point as the alternate care-of address.

15. Method according to any one of claims 12 to 14, **characterized in, that** a mobility option header is extended with the identifier of the flow and a third field containing the DiffServ information.

16. Method according to any one of claims 4, 5 and 15, **characterized in, that** updates for multiple flows are sent in the same BU, that each mobility option header incudes the DiffServ field for respective flow, and that the DiffServ field in the BU header is ignored.

17. A first computer program product, **characterized in, that** said first computer program product comprises first computer program code, which, when executed by a computer unit, will enable said computer unit to perform the steps of a MN in a method according to any one of claims 1 to 16.

18. A second computer program product, **characterized in, that** said second computer program product comprises second computer program code, which, when executed by a computer unit, will enable said computer unit to perform the steps of a HA in a method according to any one of claims 1 to 16.

19. A third computer program product, **characterized in, that** said third computer program product comprises third computer program code, which, when executed by a computer unit, will enable said computer unit to perform the steps of a CN in a method according to any one of claims 1 to 16.

20. Computer readable medium, **characterized in, that** computer program code according to any one of claims 17 to 19 is stored on said computer readable medium.
